# EUROPÄISCHE PATENTANMELDUNG

(11) **EP 2 602 528 A2**
(43) Veröffentlichungstag der Anmeldung: **12.06.2013**
(21) Anmeldenummer: 12193479.8
(22) Anmeldetag: 20.11.2012
(51) Int. Cl.: F16L 11/16

(54) **Metallschlauch und Verwendung eines solchen**

(30) Priorität: 08.12.2011 DE 102011087956
(71) Anmelder: Witzenmann GmbH, 75175 Pforzheim (DE)
(72) Erfinder: Pluschke, Michael, 75305 Neuenbürg (DE); Matthies, Jens-Uwe, 76135 Karlsruhe (DE)
(74) Vertreter: Lemcke, Brommer & Partner

(57) **Zusammenfassung**

Die vorliegende Erfindung betrifft einen Metallschlauch sowie eine Verwendung hierfür, bestehend aus einem helixförmig gewickelten, im Querschnitt S-förmigen Metallprofil (1 ), wobei der Querschnitt des Metallprofils (1 ) einen ersten ebenen Profilabschnitt (2) und einen zweiten ebenen Profilabschnitt (3) aufweist, die in versetzten, zueinander parallelen, ersten (4) und zweiten Ebenen (5) verlaufen und über einen Verbindungsabschnitt (6) miteinander verbunden sind, und die sich an ihren dem Verbindungsabschnitt (6) gegenüberliegenden Ende in je einen, zur Ebene (4, 5) des jeweils anderen ebenen Profilabschnitts (2, 3) hin orientierten, zurückgebogenen Hakenabschnitt (8, 9) fortsetzen, der in gewickeltem Zustand zum Verhaken mit einem Hakenabschnitt (8, 9) einer benachbarte Metallprofilwicklung (7) dient, dadurch gekennzeichnet, dass zumindest einer der beiden Hakenabschnitte (8, 9) des Metallprofils (1 ) solcherart mit einem Biegeradius (C1, C2) versehen ist, dass er im gewickelten Zustand des Metallschlauchs mit einer elastischen Anpresskraft (Fn1, Fn2) an dem ersten oder zweiten ebenen Profilabschnitt (2, 3) der benachbarten Metallprofilwicklung (7) anliegt.

## Beschreibung

Die Erfindung betrifft einen Metallschlauch, bestehend aus einem helixförmig gewickelten, im Querschnitt S-förmigen Metallprofil nach dem Oberbegriff des Anspruchs 1, sowie die Verwendung eines solchen.

Das Metallprofil, aus dem ein Metallschlauch der vorliegenden Art besteht, umfasst in seinem Querschnitt einen ersten ebenen Profilabschnitt und einen zweiten ebenen Profilabschnitt, die in versetzten, zueinander parallelen ersten und zweiten Ebenen verlaufen und über einen Verbindungsabschnitt miteinander verbunden sind. Ferner sind an dem ersten und zweiten ebenen Profilabschnitt, an deren dem Verbindungsabschnitt gegenüberliegenden Ende, Hakenabschnittte angeformt, die hakenförmig in Richtung zur Ebene des jeweils anderen ebenen Profilabschnitts zurückgebogen und dazu vorgesehen sind, sich im gewickelten Zustand mit einem Hakenabschnitt einer benachbarten Metallprofilwicklung zu verhaken, so dass die einzelnen Wicklungen mit den jeweils benachbarten Wicklungen ineinandergreifen und so die Stabilität des fertigen Metallschlauchs sichern. Da das Metallprofil in der Regel so geformt ist, dass die Hakenabschnitte kürzer ausgebildet sind, als die ebenen Profilabschnitte, ist die Verhakung der benachbarten Wicklungen nicht starr, sondern die Wicklungen können sich innerhalb der Differenz zwischen der auf den zugehörigen ebenen Profilabschnitt projizierten Länge des Hakenabschnitts und der Länge des ebenen Profilabschnitts gegeneinander bewegen. Diese Beweglichkeit führt dazu, dass der Metallschlauch insgesamt beweglich ist, d.h. längenveränderlich ist und gebogen werden kann.

Metallschläuche dieser Art sind unter der Bezeichnung Agraffschlauch seit langem bekannt. Sie werden insbesondere in Abgasanlagen von Verbrennungsmotoren eingesetzt, wo sie ein Element eines flexiblen Leitungsteils zum Entkoppeln von Vibrationen bilden, die der pulsierende Abgasstrom des Verbrennungsmotors erzeugt, sowie von Lastwechselbewegungen und Wärmeausdehnungsbewegungen. Ein solches flexibles Leitungsteil umfasst neben einem Agraffschlauch außerdem einen, diesen koaxial umgebenden Metallbalg und gegebenenfalls weitere Bauelemente, wie ein Gestrickeschlauch, der den Metallbalg außen umgibt und dergleichen. Die Aufgabe des Agraffschlauchs bzw. des Metallschlauchs der vorliegenden Art in einem solchen flexiblen Leitungsteil besteht hauptsächlich darin, den Abgasstrom zu führen und Verwirbelungen innerhalb der Wellungen des Metallbalgs zu verhindern sowie den Metallbalg gegebenenfalls vor allzu hoher Temperaturbelastung durch den heißen Abgasstrom zu schützen. Daneben soll der Agraffschlauch zwar beweglich sein, so dass er Bewegungen des Balgs bzw. Relativbewegungen der durch den Balg verbundenen Abgasleitungen mitmachen kann und diese Bewegungen nicht behindert. Gleichzeitig soll er bei Bewegungen eine innere Reibung aufweisen, um eine Verlustarbeit des Gesamtsystems bei Bewegungen zu erzeugen. Dies dient dazu, die Eigenschwingungen des Metallbalgs zu dämpfen und so eine Resonanz bei Schwingungen im Bereich der Eigenfrequenzen zu verhindern. Denn Resonanzen sind nachteilig, da zum einen entsprechende Schwingungsfrequenzen nicht entkoppelt werden und zum anderen die Gefahr einer Zerstörung des flexiblen Leitungsteils aufgrund hoher Bewegungsamplituden besteht.

Im Stand der Technik werden Agraffschläuche, insbesondere für die oben genannte Verwendung in einem flexiblen Leitungsteil einer Abgasanlage, nicht nur aus einem im Querschnitt S-förmigen Metallprofil gewickelt, sondern die ineinander verhakten Hakenabschnitte des Metallprofils benachbarter Wicklungen werden radial gegeneinander verpresst, um sicherzustellen, dass sich der fertige Metallschlauch nicht wieder aufwickelt und dass sich die benachbarten Wicklungen nur gegen eine Reibungskraft relativ zueinander bewegen können, also eine innere Reibung vorliegt, die bei Bewegungen die erwünschte Verlustarbeit erzeugt.

Das radiale Verpressen der Hakenabschnitte bzw. Agraffen des Agraffschlauchs führt allerdings dazu, dass der fertige Metallschlauch keinen kreisrunden Querschnitt aufweist, die einzelnen Wicklungen also nicht entlang eines Kreisbogens bzw. einer Schraubenlinie verlaufen. Der Querschnitt des Metallschlauchs wird vielmehr zu einem Polygon, das die Kreisform lediglich annähert. Die Schraubenlinie der Wicklungen des Metallprofils knicken also in regelmäßigen Abständen ab, so dass der Radius des Metallschlauchs nicht konstant ist, sondern einen unstetigen Verlauf mit Knicken aufweist.

Bei der Verwendung eines Metallschlauchs der vorliegenden Art in einem flexiblen Leitungsteil einer Abgasanlage eines Verbrennungsmotors ist der polygonförmige Querschnitt bislang nicht als Problem gesehen worden. Allerdings war zu beobachten, dass die Verlustarbeit eines solchen flexiblen Leitungsteils nach einer gewissen Betriebszeit abnimmt und hierdurch Resonanzschwingungen zunehmen, was letztendlich zu einem vorzeitigen Versagen des flexiblen Leitungsteils insgesamt führen kann.

Der vorliegenden Erfindung liegt daher die Aufgabe zugrunde, einen Metallschlauch der eingangs genannten Art zu verbessern, so dass er insbesondere seine innere Reibung auch bei Verwendungen wie in einem flexiblen Leitungsteil einer Abgasanlage eines Verbrennungsmotors länger als bisher beibehält.

Gelöst ist diese Aufgabe durch einen Metallschlauch mit den Merkmalen des beigefügten Anspruchs 1. Bevorzugte Weiterbildungen des erfindungsgemäßen Metallschlauchs sind in den Ansprüchen 2 bis 7 niedergelegt. Eine vorteilhafte Verwendung des erfindungsgemäßen Metallschlauchs findet sich im Anspruch 8.

Erfindungsgemäß ist erkannt worden, dass die Polygonform des Querschnitts eines herkömmlichen Agraffschlauchs nachteilig sein kann. Denn in aller Regel ist die innere Reibung an den Polygonecken sehr viel höher als im restlichen Umfang des Metallschlauchs, wobei es sogar vorkommt, dass zwischen den Polygonecken gar keine innere Reibung bei den ineinander verhakten Wicklungen vorliegt. Insbesondere bei der Verwendung in einem flexiblen Leitungsteil einer Abgasanlage eines Verbrennungsmotors ist ein Metallschlauch der vorliegenden Art jedoch lange Zeit intensiven Bewegungen, insbesondere Schwingungen ausgesetzt, so dass die in den Polygonecken aneinander reibenden Bereiche der Metallprofilwicklungen vergleichsweise rasch verschleißen. Dieser Verschleiß hat zur Folge, dass die innere Reibung eines bekannten Agraffschlauchs insgesamt und somit seine schwingungsdämpfende Eigenschaft abnimmt, was letztendlich zum vorzeitigen Ausfall des gesamten flexiblen Leitungsteils führen kann.

Ausgehend von diesen erfindungsgemäßen Erkenntnissen wird gemäß der vorliegenden Erfindung vorgeschlagen, auf das Verpressen der Hakenabschnitte der Metallprofilwicklungen gegeneinander, das letztendlich zur Polygonform des Metallschlauchquerschnitts führt, zu verzichten, und statt dessen die Hakenabschnitte des Metallprofils bzw. zumindest einen der beiden Hakenabschnitte des Metallprofils solcherart mit einem Biegeradius zu versehen, dass er in gewickeltem Zustand des Metallschlauchs mit einer elastischen Anpresskraft an dem ersten bzw. zweiten ebenen Profilabschnitt der benachbarten Metallprofilwicklung anliegt. Der entsprechende Hakenabschnitt wird also nicht wie bisher solcherart zurückgebogen, dass er widerstandslos in den entsprechenden Hakenabschnitt der benachbarten Wicklung eingreift, sondern er wird insofern nur unvollkommen zurückgebogen, dass er gegen eine elastische Rückstellkraft in die Verhakung mit der benachbarten Wicklung gezwungen werden muss. Im Ergebnis liegt er dann mit einer elastischen Anpresskraft am entsprechenden ebenen Profilabschnitt der benachbarten Wicklung an. Diese elastische Anpresskraft sorgt für die gewünschte innere Reibung des Metallschlauchs. Daneben verhindert sie, dass sich der Metallschlauch wieder aufwickelt. Ein Verpressen der Hakenabschnitte erübrigt sich damit, so dass der erfindungsgemäße Metallschlauch einen kreisrunden Querschnitt aufweisen und das Metallprofil in einer stetigen Krümmungslinie gewickelt werden kann. Die bisherige, erfindungsgemäß als nachteilig erkannte Polygonform des Metallschlauchquerschnitts entfällt.

Da die innere Reibung des erfindungsgemäßen Metallschlauchs durch eine elastische Anpresskraft zwischen den einzelnen Wicklungen erzeugt wird, die sich gleichmäßig über den gesamten Umfang des Metallschlauchs verteilt, ist der Verschleiß an den gegeneinander reibenden Teilen naturgemäß sehr viel geringer, denn die Erzeugung der Verlustarbeit verteilt sich auf eine sehr viel größere Fläche als im Stand der Technik. Darüber hinaus gewährleistet die elastische Anpresskraft, dass sich die gegeneinander reibenden Teile selbst dann, wenn nennenswerter Verschleiß zu beobachten ist, selbsttätig nachstellen und den reibenden Kontakt nicht verlieren. Verschleißeffekte führen also beim erfindungsgemäßen Metallschlauch nicht mehr dazu, dass die innere Reibung und damit die Verlustarbeit bei Schwingungen mit der Zeit abnimmt. Die Nachteile insbesondere bei der oben beschriebenen, bevorzugten Verwendung eines Metallschlauchs der vorliegenden Art in einem flexiblen Leitungsteil einer Abgasanlage sind mit der vorliegenden Erfindung also beseitigt; die Standzeit eines flexiblen Leitungsteils mit erfindungsgemäß ausgestaltetem Metallschlauch ist signifikant höher.

Nach einer bevorzugten Ausgestaltung der vorliegenden Erfindung verläuft der Biegeradius des Hakenabschnitts des Metallprofils zumindest in demjenigen Bereich des Hakenabschnitts, der in gewickeltem Zustand an einem ebenen Profilabschnitt der benachbarten Metallprofilwicklung anliegt, stetig, also ohne Abkantungen oder gerade Abschnitte des Profilquerschnitts. Hierdurch entsteht eine gegen den ebenen Profilabschnitt der benachbarten Wicklung weisende, konvex gewölbte Oberfläche, so dass eine hohe Beweglichkeit der Wicklungen gegeneinander und eine stabile elastische Anpresskraft gleichzeitig gegeben sind. Außerdem wird hierdurch das Ineinander-Verhaken beim Wickeln des Metallschlauchs erleichtert. Bevorzugterweise verläuft der Biegeradius des Hakenabschnitts schon vom ebenen Profilabschnitt ausgehend, aus dem er hervorgeht, stetig.

Besondere Vorteile ergeben sich im Rahmen der vorliegenden Erfindung, wenn die mit der erfindungsgemäßen elastischen Anpresskraft aneinanderliegenden Oberflächen mit einer verschließreduzierenden Beschichtung, insbesondere einer Nitritbeschichtung versehen sind. Dies kann so umgesetzt werden, dass der Hakenabschnitt zumindest in demjenigen Bereich, der im gewickelten Zustand an einem ebenen Profilabschnitt der benachbarten Metallprofilwicklung anliegt, eine Kontaktoberfläche mit einer verschleißreduzierenden Beschichtung aufweist, oder dass der eben genannte ebene Profilabschnitt mit einer verschleißreduzierenden Beschichtung versehen ist. Es können auch beide Bereiche des Metallprofils mit einer verschleißreduzierenden Beschichtung versehen sein. Diese kann recht einfach auf das ebene Metallband aufgebracht werden, aus dem dann das Metallprofil geformt wird, welches durch Wickeln letztendlich den erfindungsgemäßen Metallschlauch bildet.

Die verschleißreduzierende Beschichtung in dieser bevorzugten Weiterbildung der vorliegenden Erfindung reduziert den Verschleiß der bei insbesondere Schwingungsbewegungen des Metallschlauchs aneinander reibenden Oberflächen nochmals zusätzlich, so dass die eingangs genannte Problemstellung nochmals verbessert gelöst ist.

Der S-förmige Querschnitt des erfindungsgemäßen Metallprofils kann im Wesentlichen punktsymmetrisch geformt sein, was fertigungstechnische Vorteile bietet. Dies bedeutet insbesondere, dass beide Hakenabschnitte des Querschnitts des Metallprofils, aus dem der Metallschlauch gewickelt wird, mit einem Biegeradius versehen sind, der die erfindungsgemäße elastische Anpresskraft bewirkt.

Der erfindungsgemäße Metallschlauch wird bevorzugt als gasstromführendes Bauteil innerhalb des lichten Innenraums eines Metallbalgs in einem flexiblen Leitungsteil, insbesondere einem Entkoppelelement, in einer Abgasanlage eines Verbrennungsmotors verwendet.

Ein Ausführungsbeispiel für einen erfindungsgemäß ausgestalteten Metallschlauch und die erfindungsgemäßen Unterschiede zu einem Metallschlauch nach dem Stand der Technik werden im Folgenden anhand der beigefügten Zeichnungen näher beschrieben und erläutert. Es zeigen:
- Figur 1: einen schematischen Längsschnitt durch einen erfindungsgemäß ausgestalteten Metallschlauch;
- Figur 2: einen Längsschnitt durch einen erfindungsgemäß ausgestalteten Metallschlauch;
- Figur 3: einen schematischen Längsschnitt wie Figur 1, jedoch durch einen Metallschlauch nach dem Stand der Technik;
- Figur 4: einen schematischen Querschnitt eines Metallschlauchs nach dem Stand der Technik;
- Figur 5: einen Schnitt durch das Ausgangsbandmaterial zur Herstellung eines Metallprofils für die Wicklungen eines erfindungsgemäß ausgestalteten Metallschlauchs.

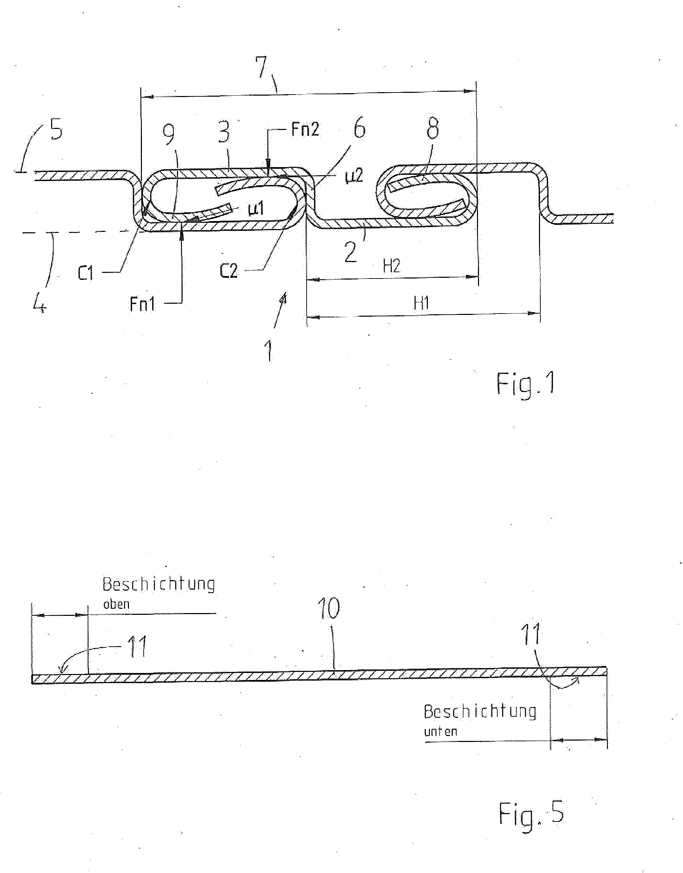

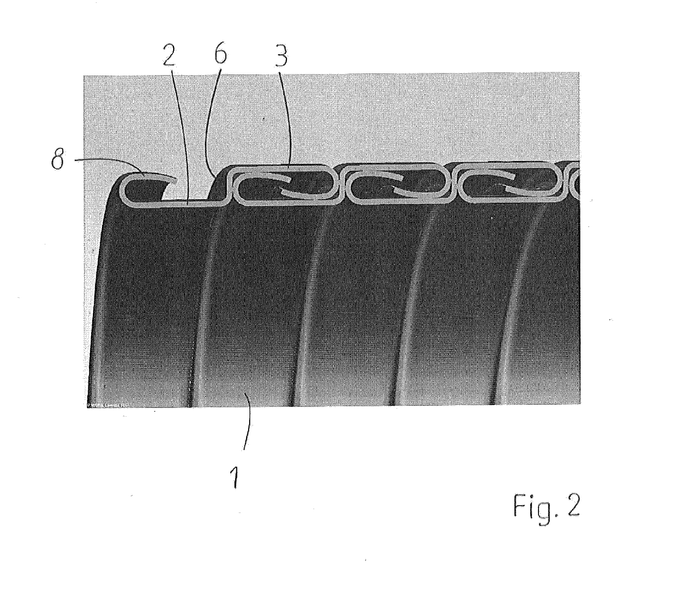

Figur 1 und Figur 2 zeigen einen Längsschnitt durch einen erfindungsgemäß ausgestalteten Metallschlauch, der aus einem helixförmig gewickelten, im Querschnitt S-förmigen Metallprofil 1 besteht. Dieses Metallprofil weist einen ersten ebenen Profilabschnitt 1 und einen zweiten ebenen Profilabschnitt 3 auf, die in versetzten, zueinander parallelen ersten 4 und zweiten Ebenen 5 verlaufen. Diese Ebenen 4, 5 sind streng genommen koaxiale Zylinderflächen, die der Außenfläche und der Innenfläche des fertigen Metallschlauchs entsprechen. Die beiden ebenen Profilabschnitte 2, 3 sind über einen Verbindungsabschnitt 6 miteinander verbunden.

Um die Verhakung der einzelnen Wicklungen 7, die naturgemäß einer Breite des Metallprofils entsprechen, untereinander zu gewährleisten, setzen sich die ebenen Profilabschnitte 2, 3 auf ihrer dem Verbindungsabschnitt 6 abgewandten Seite in einen ersten 8 und einen zweiten Hakenabschnitt 9 fort.

Wie anhand Figur 1 verdeutlicht wird, geht der erste Hakenabschnitt 8 aus dem ersten ebenen Profilabschnitt 2 hervor und ist hakenförmig zur zweiten Ebene 5 des zweiten ebenen Profilabschnitts 3 hin orientiert zurückgebogen. In entsprechender Weise ist der zweite Hakenabschnitt 9 ausgehend vom zweiten ebenen Profilabschnitt 3, zur ersten Ebene 4 des ersten ebenen Profilabschnitts 2 hin orientiert hakenförmig zurückgebogen. Da die auf die Ebenen 4, 5 projizierte Länge der Hakenabschnitte 8, 9 kürzer ist, als die Länge der ebenen Profilabschnitte 2, 3, können sich die einzelnen Wicklungen 7 des Metallschlauchs axial gegeneinander verschieben. In Figur 1 ist in der rechten Zeichnungshälfte eine Situation dargestellt, in der die beiden miteinander verhakten Wicklungen 7 maximal auseinandergezogen sind, während die linke Zeichnungshälfte eine Situation zeigt, in der der Metallschlauch sich in Stauchlage befindet, die beiden beteiligten Wicklungen also maximal zueinander hin verschoben sind. Die Länge des Überlappungsbereichs in Stauchlage ist in Figur 1 mit H2 bezeichnet, während die voll ausgezogene Länge des Überlappungsbereichs in Figur 1 mit H1 bezeichnet ist.

Anhand der Darstellung in Figur 1 wird deutlich, dass die auf die Ebenen 4, 5 projizierte Länge der Hakenabschnitte 8, 9 etwas mehr als die Hälfte der Längen der ebenen Profilabschnitte 2, 3 beträgt, so dass auch in voll ausgezogenem Zustand, der in der linken Zeichnungshälfte dargestellt ist, eine Überlappung der beiden Hakenabschnitte 8, 9 der beteiligten Metallprofile 1 vorhanden ist, was die Stabilität des Metallschlauchs insgesamt trotz seiner Beweglichkeit gewährleistet.

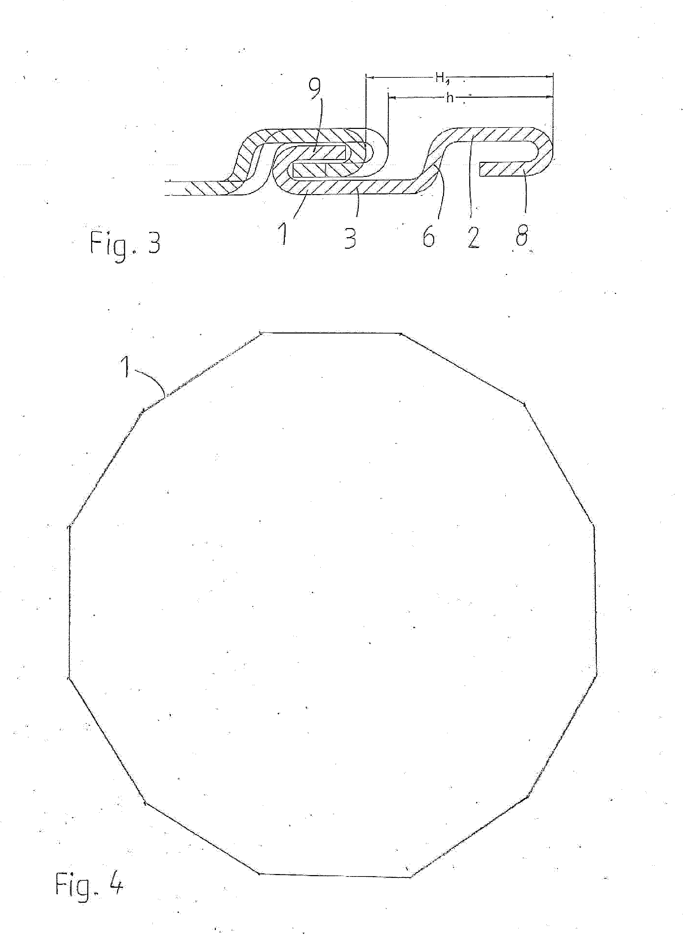

In Figur 3 ist ein Längsschnitt durch einen Metallschlauch wie in Figur 1 dargestellt, wobei der in Figur 3 dargestellte Metallschlauch jedoch ein Agraffschlauch nach dem Stand der Technik ist. Wie man anhand Figur 3 erkennen kann, gelten auch für einen Agraffschlauch nach dem Stand der Technik die oben zu den Figuren 1 und 2 beschriebenen Eigenschaften des Metallprofils 1, der ebenen Profilabschnitte 2, 3, des Verbindungsabschnitts 6 und der Hakenabschnitte 8, 9.

Im Unterschied zum Stand der Technik, der in Figur 3 dargestellt ist, weisen die Hakenabschnitte 8, 9 des erfindungsgemäßen ausgestalteten Metallschlauchs in den Figuren 1 und 2 einen Biegeradius C1, C2 auf, der gewährleistet, dass die Hakenabschnitte 8, 9 im dargestellten gewickelten Zustand mit einer elastischen Anpresskraft Fn1, Fn2 am ersten bzw. zweiten ebenen Profilabschnitt 2, 3 der jeweils benachbarten Metallprofilwicklungen 7 anliegen.

Eine solche elastische Anpresskraft ist, wie Figur 3 verdeutlicht, bei einem Agraffschlauch nach dem Stand der Technik an sich nicht gegeben. Um sicherzustellen, dass die einzelnen Wicklungen 7 des Agraffschlauchs nach dem Stand der Technik bei einer axialen Relativbewegung gegeneinander aneinander reiben, müssen die Hakenabschnitte 8, 9 radial verpresst werden. Dies führt im Endergebnis zu einem Querschnitt des fertigen Metallschlauchs, wie er in Figur 4 dargestellt ist. Der Metallschlauch ist demnach nicht mehr kreisrund im Querschnitt, sondern polygonförmig, im vorliegenden Beispiel bildet der Querschnitt ein Zwölfeck. Es liegt auf der Hand, dass die Reibung zwischen den Hakenabschnitten 8, 9 des Agraffschlauchs nach dem Stand der Technik, wie er in den Figuren 3 und 4 dargestellt ist, in den Ecken des Polygons besonders hoch ist, während die Reibung in den Geraden des Polygons deutlich kleiner ist. Wenn ein Agraffschlauch nach dem Stand der Technik auf eine gewünschte Verlustarbeit optimiert ist, besteht, wie erfindungsgemäß erkannt wurde, bei zunehmendem Verschleiß der aufeinander reibenden Flächen in den Polygonecken die Gefahr, dass dort die Reibungskräfte überproportional abnehmen und die Gesamt-Verlustarbeit des Metallschlauchs bei Bewegung und damit seine dämpfende Wirkung in einem flexiblen Leitungsteil unvorteilhafterweise stark abnimmt.

Wie Figur 1 verdeutlicht, ist im Gegensatz dazu bei einem erfindungsgemäß ausgebildeten Metallschlauch eine Änderung der Verlustarbeit durch einen Verschleiß an den Kontaktstellen mit den Reibungskoeffizienten µ1 und µ2 höchstens vernachlässigbar gering. Denn durch die Biegeradien C1 und C2 und die elastische Vorspannung der Hakenabschnitte 8, 9 gegen die ebenen Profilabschnitte 2, 3 bleibt die Reibungskraft Fn1 bzw. Fn2 bei etwaigem Verschleiß bestehen und die Hakenabschnitte 8, 9 stellen sich selbsttätig nach.

Darüber hinaus bietet der im Ausführungsbeispiel nach Figur 1 stetig ausgestaltete Biegeradius C1 bzw. C2 den Vorteil, dass bei einer biegenden bzw. abknickenden Bewegung des Metallschlauchs keine Verkantung zwischen den miteinander verhakten, benachbarten Wicklungen 7 auftreten kann. Denn die Hakenabschnitte 8, 9 bilden, wie in Figur 1 und Figur 2 dargestellt, zu den ebenen Profilabschnitten 2, 3 hin eine konvex gewölbte Kontaktfläche.

Figur 5 zeigt schließlich ein Ausgangs-Bandmaterial 10, aus dem das Metallprofil 1 gebildet wird, um dieses dann zu einem erfindungsgemäßen Metallschlauch wickeln zu können. Die Besonderheit des in Figur 5 dargestellten Bandmaterials 10 besteht darin, dass bereichsweise eine verschleißreduzierende Beschichtung 11 auf seine Oberfläche aufgebracht worden ist. Nach Umformen des Bandmaterials 10 in das Metallprofil 1 sind die mit der verschleißreduzierenden Beschichtung 11 versehenen Oberflächen dann die Oberflächen der Hakenabschnitte 8, 9, die zu den ebenen Profilabschnitten 2, 3 hin orientiert sind, gegen die sich wiederum die Hakenabschnitte 8, 9 mit elastischer Anpresskraft Fn1, Fn2 anlegen. Somit ist die Kontaktfläche zwischen den Hakenabschnitten 8, 9 und den ebenen Profilabschnitten 2, 3 mit einer verschleißreduzierenden Beschichtung 11 versehen, was die Reibungskräfte und damit die Verlustarbeit des Metallschlauchs über lange Zeit hinweg konstant bleibend gewährleistet.

Wie das in den Figuren dargestellte Ausführungsbeispiel verdeutlicht, stellt die Erfindung einen Metallschlauch zur Verfügung, dessen innere Reibung sehr viel genauer als bisher designed werden kann und langzeitstabil im Wesentlichen konstant bleibt. Darüber hinaus vereinfacht sich die Fertigung des Metallschlauchs, und er ist bei vergleichbarer innerer Reibung deutlich beweglicher als ein Metallschlauch nach dem Stand der Technik. Schließlich besteht auch die Gefahr von Verkantungen der einzelnen Wicklungen gegeneinander nicht mehr, wenn der erfindungsgemäße Metallschlauch gebogen bzw. abgeknickt wird.

## Patentansprüche

1. Metallschlauch, bestehend aus einem helixförmig gewickelten, im Querschnitt S-förmigen Metallprofil (1), wobei der Querschnitt des Metallprofils (1) einen ersten ebenen Profilabschnitt (2) und einen zweiten ebenen Profilabschnitt (3) aufweist, die in versetzten, zueinander parallelen, ersten (4) und zweiten Ebenen (5) verlaufen und über einen Verbindungsabschnitt (6) miteinander verbunden sind, und die sich an ihren dem Verbindungsabschnitt (6) gegenüberliegenden Ende in je einen, zur Ebene (4, 5) des jeweils anderen ebenen Profilabschnitts (2, 3) hin orientierten, zurückgebogenen Hakenabschnitt (8, 9) fortsetzen, der in gewickeltem Zustand zum Verhaken mit einem Hakenabschnitt (8, 9) einer benachbarte Metallprofilwicklung (7) dient,
**dadurch gekennzeichnet,**
**dass** zumindest einer der beiden Hakenabschnitte (8, 9) des Metallprofils (1) solcherart mit einem Biegeradius (C1, C2) versehen ist, dass er im gewickelten Zustand des Metallschlauchs mit einer elastischen Anpresskraft (Fn1, Fn2) an dem ersten oder zweiten ebenen Profilabschnitt (2, 3) der benachbarten Metallprofilwicklung (7) anliegt.

2. Metallschlauch nach Anspruch 1,
**dadurch gekennzeichnet,**
**dass** der Biegeradius (C1, C2) zumindest in demjenigen Bereich des Hakenabschnitts (8, 9), der im gewickelten Zustand an einem ebenen Profilabschnitt (2, 3) der benachbarten Metallprofilwicklung (7) anliegt, stetig verläuft.

3. Metallschlauch nach Anspruch 2,
**dadurch gekennzeichnet,**
**dass** der Biegeradius (C1, C2) vom ebenen Profilabschnitt (2, 3), aus dem der Hakenabschnitt (8, 9) hervorgeht, ausgehend stetig verläuft.

4. Metallschlauch nach mindestens einem der Ansprüche 1 bis 3,
**dadurch gekennzeichnet,**
**dass** der Hakenabschnitt (8, 9) mit Biegeradius (C1, C2) zumindest in demjenigen Bereich, der im gewickelten Zustand an einem ebenen Profilabschnitt (2, 3) der benachbarten Metallprofilwicklung (7) anliegt, eine Kontaktoberfläche mit einer verschleißreduzierenden Beschichtung (11) aufweist.

5. Metallschlauch nach mindestens einem der Ansprüche 1 bis 4,
**dadurch gekennzeichnet,**
**dass** der ebene Profilabschnitt (2, 3), an dem im gewickelten Zustand ein Hakenabschnitt (8, 9) der jeweils benachbarten Metallprofilwicklung (7) anliegt, dort mit einer verschleißreduzierenden Beschichtung (11) versehen ist.

6. Metallschlauch nach einem der Ansprüche 4 oder 5,
**dadurch gekennzeichnet,**
**dass** die verschleißreduzierende Beschichtung (11) eine Nitritbeschichtung ist.

7. Metallschlauch nach mindestens einem der Ansprüche 1 bis 6,
**dadurch gekennzeichnet,**
**dass** der S-förmige Querschnitt des Metallprofils (1) im Wesentlichen punktsymmetrisch geformt ist.

8. Verwendung eines Metallschlauchs nach mindestens einem der Ansprüche 1 bis 7 als gasstromführendes Bauteil innerhalb des lichten Innenraums eines Metallbalgs in einem flexiblen Leitungsteil einer Abgasanlage eines Verbrennungsmotors.
